# EUROPÄISCHE PATENTANMELDUNG

(11) **EP 4 432 583 A1**
(43) Veröffentlichungstag der Anmeldung: **18.09.2024**
(21) Anmeldenummer: 24161137.5
(22) Anmeldetag: 04.03.2024
(51) Int. Cl.: H04B 10/112

(54) **INTELLIGENTE KOMBINIERTE LASER-RICHTFUNK-VERBINDUNG**

(30) Priorität: 17.03.2023 DE 102023106775
(71) Anmelder: Deutsche Telekom AG, 53113 Bonn (DE)
(72) Erfinder: KELLER, Stefan, 78662 Bösingen (DE); SCHMIDT, Peter, 66133 Saarbrücken (DE)
(74) Vertreter: RDL Patentanwälte PartG mbB

(57) **Zusammenfassung**

Verfahren zum Betreiben einer Basisstation eines Mobilfunknetzes, bei dem eine Switch-Einheit einer ersten Basisstation eines Mobilfunknetzes einen Datenstrom empfängt und den empfangenen Datenstrom mittels einer Laserverbindung oder mittels einer Richtfunkverbindung zu einer Switch-Einheit einer zweiten Basisstation des Mobilfunknetzes überträgt, sowie Basisstation für ein Mobilfunknetz und Computerprogrammprodukt.

## Beschreibung

Die Erfindung betrifft ein Verfahren zum Betreiben einer Basisstation eines Mobilfunknetzes, bei dem eine Switch-Einheit einer ersten Basisstation eines Mobilfunknetzes einen Datenstrom empfängt und den empfangenen Datenstrom mittels einer Laserverbindung oder mittels einer Richtfunkverbindung zu einer Switch-Einheit einer zweiten Basisstation des Mobilfunknetzes überträgt. Ferner betrifft die Erfindung eine Basisstation für ein Mobilfunknetz und ein Computerprogrammprodukt.

Verfahren der eingangs genannten Art sind im Stand der Technik in unterschiedlichen Ausgestaltungen bekannt und dienen dazu, zwei Basisstationen eines Mobilfunknetzes "durch die Luft" zu verbinden. Durch die Luftverbindung kann eine aufwändige Glasfaserverbindung der beiden Basisstationen vermieden werden.

Eine Basisstation ist hier allgemein und unabhängig von einem Mobilfunkstandard als eine Base Transceiver Station, BTS, aufzufassen, d.h. die Erfindung ist nicht auf bestimmte Mobilfunkstandards beschränkt.

Sowohl die Laserverbindung als auch die Richtfunkverbindung beruhen auf elektromagnetischen Wellen. Allerdings weist ein Laserlicht der Laserverbindung eine höhere Frequenz bzw. eine kürzere Wellenlänge auf als Funkwellen der Richtfunkverbindung.

Infolgedessen stellt die Laserverbindung eine viel höhere maximale Bitrate und eine niedrigere minimale Latenz für den übertragenen Datenstrom zur Verfügung als die Richtfunkverbindung. Die maximale Bitrate der Richtfunkverbindung ist überdies deutlich niedriger als die maximale Bitrate einer Glasfaserverbindung.

Die Richtfunkverbindung ist dagegen viel unabhängiger von einem Wettergeschehen zwischen den beiden Basisstationen als die Laserverbindung und erlaubt infolgedessen eine höhere Stabilität der drahtlosen Verbindung. Die Praxis zeigt, dass die maximale Bitrate der Laserverbindung bei schwerem Wetter, insbesondere bei Nebel oder Schneefall, stark abnimmt oder sogar abbricht.

Wenn zwei Basisstationen für eine Luftverbindung sowohl eine Laserverbindung als auch eine Richtfunkverbindung bereitstellen und abhängig von einem Wettergeschehen zwischen den beiden Basisstationen von der Laserverbindung zu der Richtfunkverbindung bzw. von der Richtfunkverbindung zu der Laserverbindung wechseln, wird der übertragene Datenstrom für eine Umschaltzeit unterbrochen.

Durch die Unterbrechung des übertragenen Datenstroms können verteilte Anwendungen, die den Datenstrom senden oder empfangen und von mit den Basisstationen verbundenen mobilen Endgeräten ausgeführt werden, beeinträchtigt sein oder sogar fehlerhaft abbrechen, was unerwünscht ist.

Es ist daher eine Aufgabe der Erfindung, ein Verfahren zum Betreiben einer Basisstation eines Mobilfunknetzes vorzuschlagen, das sowohl eine hohe maximale Bitrate bzw. eine niedrige minimale Latenz als auch eine weitgehende Wetterunabhängigkeit einer Luftverbindung zu einer weiteren Basisstation unterbrechungsfrei bereitstellt. Weitere Aufgaben der Erfindung sind, eine Basisstation für eine Mobilfunknetz und ein Computerprogrammprodukt bereitzustellen.

Ein Gegenstand der Erfindung ist ein Verfahren zum Betreiben einer Basisstation eines Mobilfunknetzes, bei dem eine Switch-Einheit einer ersten Basisstation eines Mobilfunknetzes einen Datenstrom empfängt und den empfangenen Datenstrom mittels einer Laserverbindung oder mittels einer Richtfunkverbindung zu einer korrespondierenden Switch-Einheit einer zweiten Basisstation des Mobilfunknetzes überträgt. Die erste Basisstation und die zweite Basisstation sind ausgebildet, zwei alternative Luftverbindungen, die Laserverbindung oder die Richtfunkverbindung, bereitzustellen, d.h. sich "durch die Luft", d.h. ohne ein Kabel oder eine Glasfaser, zu verbinden.

Erfindungsgemäß ermittelt die Switch-Einheit der ersten Basisstation eine maximale erste Sendebitrate der Laserverbindung und eine maximale erste Sendebitrate der Richtfunkverbindung und empfängt die Switch-Einheit von der Switch-Einheit der zweiten Basisstation eine maximale zweite Sendebitrate der Laserverbindung und eine maximale zweite Sendebitrate der Richtfunkverbindung und teilt die Switch-Einheit der ersten Basisstation den empfangenen Datenstrom in einen Laserdatenstrom und in einen Richtfunkdatenstrom auf und überträgt den Laserdatenstrom mittels der Laserverbindung und den Richtfunkdatenstrom mittels der Richtfunkverbindung gleichzeitig, wenn die ermittelte maximale erste Sendebitrate der Laserverbindung und die empfangene maximale zweite Sendebitrate der Laserverbindung jeweils gleich oder kleiner sind als eine Datenrate des Datenstroms und die ermittelte maximale erste Sendebitrate der Laserverbindung oder die empfangene maximale zweite Sendebitrate der Laserverbindung gleich oder größer ist als eine vorbestimmte minimale Sendebitrate der Laserbindung. Der Laserdatenstrom und der Richtfunkdatenstrom sind jeweils komplementäre Anteile des Datenstroms.

Das simultane Nutzen der Laserverbindung und der Richtfunkverbindung zum Übertragen des Datenstroms erlaubt ein unterbrechungsfreies Übertragen des Datenstroms. Mit anderen Worten werden die beiden alternativen Luftverbindungen gleichzeitig zum Übertragen des Datenstroms genutzt, wenn die Laserverbindung für den Datenstrom nicht ausreicht und die Laserverbindung genügend durchlässig ist.

Die maximalen Sendebitraten der Laserverbindung und die maximalen Sendebitraten der Richtfunkverbindung (Linkqualität) können beispielsweise anhand von IP-Frames gemessen werden, die mit Zeitstempeln versehen werden. AIternativ können Werkzeuge wie Color Aware, iperf3 oder manuelle Stresstests zum Messen der maximalen Sendebitraten verwendet werden.

Bevorzugt wird der Datenstrom korrespondierend zu einem Verhältnis der jeweiligen maximalen Sendebitraten der Laserverbindung zu jeweiligen maximalen Sendebitraten der Richtfunkverbindungen aufgeteilt oder wird der Datenstrom derart aufgeteilt, dass eine Datenrate des Laserdatenstroms die maximalen Sendebitraten der Laserverbindung ausschöpft. Kurz gesagt, ist der Laserdatenstrom in der Regel stärker als der Richtfunkdatenstrom. Auf diese Weise profitiert die Luftverbindung von der im Vergleich zu einer Richtfunkverbindung deutlich höheren maximalen Bitrate einer Laserverbindung. Der Datenstrom wird weit überwiegend mittels der Laserverbindung übertragen.

Idealerweise umfasst das Aufteilen des Datenstroms ein Bündeln von zusammenhängenden Datenteilströmen. Auf diese Weise wird gewährleistet, dass zusammenhängende Datenteilströme nicht auf verschiedene Luftverbindungen aufgeteilt werden und ihre insbesondere zeitliche Beziehung nicht infolge unterschiedlicher Laufzeiten in den verschiedenen Luftverbindungen verlieren. Beispielsweise könnten Datenteilströme zusammenhängen, die zwischen einer Frontendinstanz und einer Backendinstanz einer verteilten Anwendung übertragen werden. Die zusammenhängenden Datenteilströme können beispielsweise an VLAN Tags oder Quell-/Ziel-IP-Adressen oder anderen Kennungen von applikativen Datenpaketen erkannt werden.

Die Switch-Einheit der zweiten Basisstation kann die empfangene maximale zweite Sendebitrate der Laserverbindung und die empfangene maximale zweite Sendebitrate der Richtfunkverbindung ermitteln. Infolgedessen können die Switch-Einheiten beider Basisstationen symmetrisch konfiguriert sein.

Vorteilhaft wird die minimale Sendebitrate der Laserverbindung abhängig von einem räumlichen Abstand der zweiten Basisstation von der ersten Basisstation bestimmt. Die Abhängigkeit der Laserverbindung von einem Wettergeschehen nimmt mit wachsendem räumlichem Abstand der beiden Basisstationen zu. Die jeweiligen Switch-Einheiten können durch ein Einstellen der minimalen Sendebitrate konfiguriert werden. Je größer der räumliche Abstand der beiden Basisstationen ist, desto höher wird die minimale Sendebitrate eingestellt.

In einer Ausführungsform wird die Richtfunkverbindung getrennt und wird der Datenstrom ausschließlich mittels der Laserverbindung übertragen, wenn die ermittelte maximale erste Sendebitrate der Laserverbindung und die empfangene maximale zweite Sendebitrate der Laserverbindung jeweils größer sind als die Datenrate des Datenstroms. In diesem Fall wird die Richtfunkverbindung nicht benötigt, weil die maximalen Sendebitraten der Laserverbindung allein für den Datenstrom ausreichen. Dieser Fall tritt bei einem günstigen Wettergeschehen und bei einem schwachen Datenstrom auf. Die Switch-Einheit stellt die Richtfunkverbindung wieder zusätzlich zu der Laserverbindung bereit und teilt den Datenstrom auf, wenn sich das Wettergeschehen verschlechtert und niedrigere maximale Sendebitraten erzwingt oder der Datenstrom stärker wird.

In einer weiteren Ausführungsform wird die Laserverbindung für eine vorbestimmte Richtfunkdauer getrennt und wird der Datenstrom ausschließlich mittels der Richtfunkverbindung übertragen, wenn die ermittelte maximale erste Sendebitrate der Laserverbindung und die empfangene maximale zweite Sendebitrate der Laserverbindung jeweils kleiner sind als die vorbestimmte minimale Sendebitrate der Laserverbindung. Dieser Fall tritt bei einem ungünstigen Wettergeschehen auf. Die Switch-Einheit stellt die Laserverbindung wieder zusätzlich zu der Richtfunkverbindung bereit und teilt den Datenstrom auf, wenn sich das Wettergeschehen verbessert und höhere maximale Sendebitraten der Laserverbindung ermöglicht.

Bevorzugt umfasst das Ermitteln einer maximalen Sendebitrate ein Messen der Sendebitrate während einer vorbestimmten Messdauer. Auf diese Weise wird sichergestellt, dass statistische Schwankungen der maximalen Sendebitrate das Verfahren nicht beeinträchtigen. Die Messdauer kann in einem Bereich von einigen Sekunden liegen.

Günstigerweise wird das Verfahren während eines Betriebs der ersten Basisstation und der zweiten Basisstation periodisch ausgeführt. Die Luftverbindung wird wiederholt an veränderliche Übertragungsbedingungen, d.h. eine variierende Stärke des Datenstroms oder ein wechselndes Wettergeschehen, angepasst. Auf diese Weise wird ein Datendurchsatz der Luftverbindung maximiert.

Noch ein Gegenstand der Erfindung ist eine Basisstation für ein Mobilfunknetz, umfassend eine Lasereinheit, eine Richtfunkeinheit und eine mit der Lasereinheit und der Richtfunkeinheit funktional verbundene Switch-Einheit. Die Switch-Einheit steuert die Lasereinheit und die Richtfunkeinheit. Die Basisstation kann eine Mehrzahl von Lasereinheiten umfassen. Mehrere Lasereinheiten erhöhen eine maximale Gesamtbitrate der Laserverbindung und verringern eine Abhängigkeit der Laserverbindung von dem Wettergeschehen.

Erfindungsgemäß ist die Switch-Einheit konfiguriert, ein Verfahren nach einer Ausführungsform der Erfindung auszuführen. Die Switch-Einheit unterstützt ein separates Nutzen einer Laserverbindung und einer Richtfunkverbindung und ein gleichzeitiges Nutzen der Laserverbindung und der Richtfunkverbindung ein unterbrechungsfreies Übertragen eines Datenstroms. Auf diese Weise ermöglicht die Switch-Einheit ein unterbrechungsfreies Übertragen des Datenstroms mit einer hohen maximalen Bitrate bzw. einer niedrigen minimalen Latenz als auch einer weitgehenden Unabhängigkeit von einem Wettergeschehen.

Ein dritter Gegenstand der Erfindung ist ein Computerprogrammprodukt, umfassend ein digitales Speichermedium mit einem Programm. Das digitale Speichermedium kann als ein Speicherchip (Random Access Memory, RAM), eine Festplatte, eine CD (Compact Disk), eine DVD (Digital Versatile Disk), ein USB (Universal Serial Bus)-Stick, ein Cloud-Speicher und dergleichen ausgebildet sein.

Erfindungsgemäß veranlasst das Programm eine Rechenvorrichtung, ein Verfahren nach einer Ausführungsform der Erfindung als die Switch-Einheit auszuführen, wenn es von einem Prozessor der Rechenvorrichtung ausgeführt wird.

Die Rechenvorrichtung wird durch das Computerprogrammprodukt zu einer Switch-Einheit einer erfindungsgemäßen Basisstation eines Mobilfunknetzes.

Ein wesentlicher Vorteil des erfindungsgemäßen Verfahrens besteht darin, dass Basisstationen mittels einer Luftverbindung unterbrechungsfrei verbunden werden können, die sowohl eine hohe maximale Bitrate bzw. eine niedrige minimale Latenz als auch eine weitgehende Wetterunabhängigkeit aufweist. Eine aufwändige Verbindung der Basisstationen mittels einer Leitung, d.h. Kabel oder Glasfaser, kann entfallen, wodurch ein Ausbauen eines Mobilfunknetzes kostengünstig und einfach ist.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einem komponentenweisen Funktionsdiagramm eine Basisstation nach einer Ausführungsform der Erfindung für ein Mobilfunknetz;
- Fig. 2: in einer Perspektivansicht eine Sende-/Empfangseinheit der in Figur 1 gezeigten Basisstation;
- Fig. 3: in einem Blockdiagramm einen mittels einer Switch-Einheit der in Figur 1 gezeigten Basisstation aufgeteilten Datenstrom.

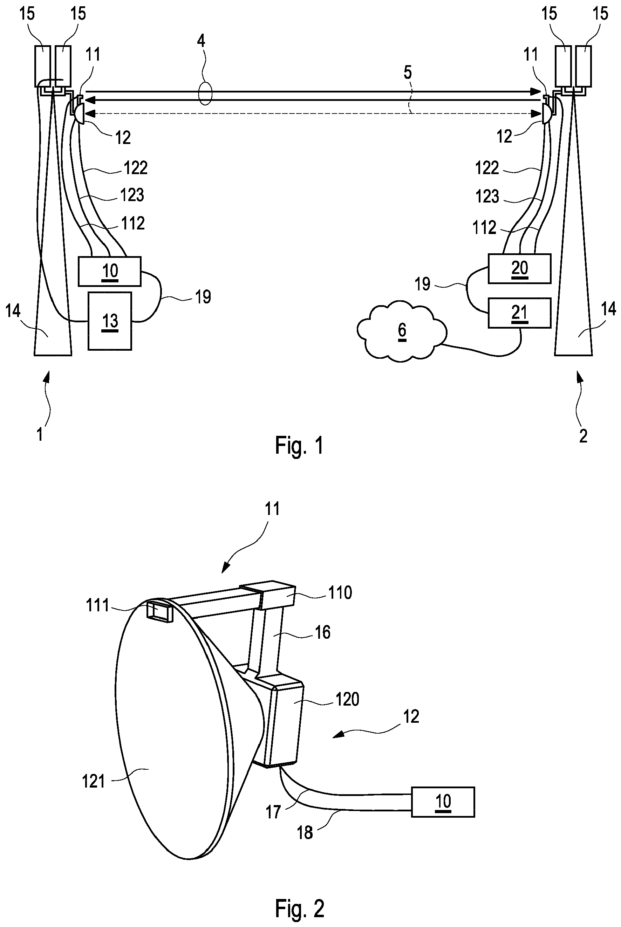

Fig. 1 zeigt in einem komponentenweisen Funktionsdiagramm eine Basisstation 1, 2 nach einer Ausführungsform der Erfindung für ein Mobilfunknetz. Die Basisstation 1, 2 umfasst eine Lasereinheit 11, eine Richtfunkeinheit 12 und eine mit der Lasereinheit 11 und der Richtfunkeinheit 12 funktional verbundene Switch-Einheit 10, 20. In anderen Ausführungsformen umfasst die Basisstation 1, 2 eine Mehrzahl von Lasereinheiten 11.

Zu der Basisstation 1, 2 kann ferner zumindest eine Mobilfunkantenne 15 gehören. Die Lasereinheit 11, die Richtfunkeinheit 12 und die zumindest eine Mobilfunkantenne 15 sind an einem Mast 14 der Basisstation 1, 2 gehalten. Weiterhin kann die Basisstation 1, 2 einen Transceiver 13 oder ein Funkzellen-Gateway 21, das mit einem Mobilfunk-Core 6 verbunden ist, umfassen. Der Transceiver 13 und das Funkzellen-Gateway 21 sind jeweils mittels einer Datenleitung 19 mit der Switch-Einheit 10, 20 verbunden. Die Switch-Einheit 10, 20 ist mittels eines Laserdatenkabels 112 mit der Lasereinheit 11 und mittels eines Richtfunksteuerkabels 122 und eines Richtfunkdatenkabels 123 mit der Richtfunkeinheit 12 verbunden.

Fig. 2 zeigt in einer Perspektivansicht eine Sende-/Empfangseinheit der in Figur 1 gezeigten Basisstation 1. Beispielsweise gehören zu der Sende-/Empfangseinheit die Lasereinheit 11 mit einem Lasermodul 110 und einer Laserröhre 111 und die Richtfunkeinheit 12 mit einem Richtfunkmodul 120 und einer Richtantenne 121. Das Lasermodul 110 ist mittels eines Verbindungsstegs 16 an dem Richtfunkmodul 120 gehalten. Die Sende-/Empfangseinheit ist mittels eines Stromkabels 17 und einer Glasfaser 18 mit der Switch-Einheit 10 verbunden.

Die Switch-Einheit 10, 20 kann ein Computerprogrammprodukt mit einem digitalen Speichermedium umfassen. Das Computerprogrammprodukt speichert ein Programm, das eine Rechenvorrichtung veranlasst, ein Verfahren nach einer Ausführungsform der Erfindung als die Switch-Einheit 10, 20 auszuführen, wenn es von einem Prozessor der Rechenvorrichtung ausgeführt wird.

Die Switch-Einheit 10, 20 ist konfiguriert, ein erfindungsgemäßes Verfahren wie folgt auszuführen. Idealerweise wird das Verfahren während eines Betriebs der Basisstation 1, 2 periodisch ausgeführt.

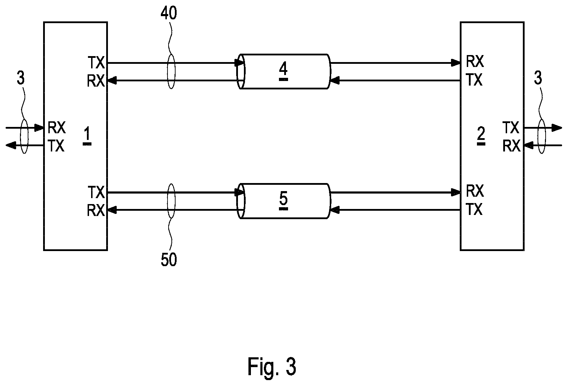

Während des Betriebs der Basisstation 1, 2 des Mobilfunknetzes empfängt eine Switch-Einheit 10 einer ersten Basisstation 1 des Mobilfunknetzes einen Datenstrom 3 (s. Fig. 3) und überträgt den empfangenen Datenstrom 3 mittels einer Laserverbindung 4 oder mittels einer Richtfunkverbindung 5 zu einer korrespondierenden Switch-Einheit 20 einer zweiten Basisstation 2 des Mobilfunknetzes.

Die Switch-Einheit 10 der ersten Basisstation 1 ermittelt eine maximale erste Sendebitrate der Laserverbindung 4 und eine maximale erste Sendebitrate der Richtfunkverbindung 5.

Idealerweise ermittelt auch die Switch-Einheit 20 der zweiten Basisstation 2 eine maximale zweite Sendebitrate der Laserverbindung 4 und eine maximale zweite Sendebitrate der Richtfunkverbindung 5.

Das Ermitteln einer maximalen Sendebitrate umfasst bevorzugt ein Messen der Sendebitrate während einer vorbestimmten Messdauer.

Die Switch-Einheit 10 der ersten Basisstation 1 empfängt von der Switch-Einheit 20 der zweiten Basisstation 2 die ermittelte maximale zweite Sendebitrate der Laserverbindung 4 und die ermittelte maximale zweite Sendebitrate der Richtfunkverbindung 5.

Die Switch-Einheit 10 der ersten Basisstation 1 teilt den empfangenen Datenstrom 3 in einen Laserdatenstrom 40 und in einen Richtfunkdatenstrom 50 (s. Fig. 3) auf. Bevorzugt wird der Datenstrom 3 korrespondierend zu einem Verhältnis der jeweiligen maximalen Sendebitraten der Laserverbindung 4 zu jeweiligen maximalen Sendebitraten der Richtfunkverbindungen 5 aufgeteilt oder wird der Datenstrom 3 derart aufgeteilt, dass eine Datenrate des Laserdatenstroms 40 die maximalen Sendebitraten der Laserverbindung 4 ausschöpft. Das Aufteilen des Datenstroms 3 umfasst vorteilhaft ein Bündeln von zusammenhängenden Datenteilströmen.

Fig. 3 zeigt in einem Blockdiagramm einen mittels der Switch-Einheit 10, 20 der in Figur 1 gezeigten Basisstation 1, 2 aufgeteilten Datenstrom 3.

Die Switch-Einheit 10 der ersten Basisstation 1 überträgt den Laserdatenstrom 40 mittels der Laserverbindung 4 und den Richtfunkdatenstrom 50 mittels der Richtfunkverbindung 5 gleichzeitig, wenn die ermittelte maximale erste Sendebitrate der Laserverbindung 4 und die empfangene maximale zweite Sendebitrate der Laserverbindung 4 jeweils gleich oder kleiner sind als eine Datenrate des Datenstroms 3 und die ermittelte maximale erste Sendebitrate der Laserverbindung 4 oder die empfangene maximale zweite Sendebitrate der Laserverbindung 4 gleich oder größer ist als eine vorbestimmte minimale Sendebitrate der Laserverbindung 4. Die minimale Sendebitrate der Laserverbindung 4 kann abhängig von einem räumlichen Abstand der zweiten Basisstation 2 von der ersten Basisstation 1 bestimmt werden.

Die Richtfunkverbindung 5 wird vorteilhaft getrennt und der Datenstrom 3 ausschließlich mittels der Laserverbindung 4 übertragen, wenn die ermittelte maximale erste Sendebitrate der Laserverbindung 4 und die empfangene maximale zweite Sendebitrate der Laserverbindung 4 jeweils größer sind als die Datenrate des Datenstroms 3.

Die Laserverbindung 4 wird ferner vorteilhaft für eine vorbestimmte Richtfunkdauer getrennt und der Datenstrom 3 ausschließlich mittels der Richtfunkverbindung 5 übertragen, wenn die ermittelte maximale erste Sendebitrate der Laserverbindung 4 und die empfangene maximale zweite Sendebitrate der Laserverbindung 4 jeweils kleiner sind als die vorbestimmte minimale Sendebitrate der Laserverbindung 4.

### Bezugszeichenliste

- 1: erste Basisstation
- 10: Switch-Einheit
- 11: Lasereinheit
- 110: Lasermodul
- 111: Laserröhre
- 112: Laserdatenkabel
- 12: Richtfunkeinheit
- 120: Richtfunkmodul
- 121: Richtfunkantenne
- 122: Richtfunksteuerkabel
- 123: Richtfunkdatenkabel
- 13: Transceiver
- 14: Mast
- 15: Mobilfunkantenne
- 16: Verbindungssteg
- 17: Stromkabel
- 18: Glasfaser
- 19: Datenleitung
- 2: zweite Basisstation
- 20: Switch-Einheit
- 21: Funkzellen-Gateway
- 3: Datenstrom
- 4: Laserverbindung
- 40: Laserdatenstrom
- 5: Richtfunkverbindung
- 50: Richtfunkdatenstrom
- 6: Mobilfunk-Core

## Patentansprüche

1. Verfahren zum Betreiben einer Basisstation (1, 2) eines Mobilfunknetzes, bei dem
- eine Switch-Einheit (10) einer ersten Basisstation (1) eines Mobilfunknetzes einen Datenstrom (3) empfängt und den empfangenen Datenstrom (3) mittels einer Laserverbindung (4) oder mittels einer Richtfunkverbindung (5) zu einer korrespondierenden Switch-Einheit (20) einer zweiten Basisstation (2) des Mobilfunknetzes überträgt;
- die Switch-Einheit (10) der ersten Basisstation (1) eine maximale erste Sendebitrate der Laserverbindung (4) und eine maximale erste Sendebitrate der Richtfunkverbindung (5) ermittelt und von der Switch-Einheit (20) der zweiten Basisstation (2) eine maximale zweite Sendebitrate der Laserverbindung (4) und eine maximale zweite Sendebitrate der Richtfunkverbindung (5) empfängt;
- die Switch-Einheit (10) der ersten Basisstation (1) den empfangenen Datenstrom (3) in einen Laserdatenstrom (40) und in einen Richtfunkdatenstrom (50) aufteilt und den Laserdatenstrom (40) mittels der Laserverbindung (4) und den Richtfunkdatenstrom (50) mittels der Richtfunkverbindung (5) gleichzeitig überträgt, wenn die ermittelte maximale erste Sendebitrate der Laserverbindung (4) und die empfangene maximale zweite Sendebitrate der Laserverbindung (4) jeweils gleich oder kleiner sind als eine Datenrate des Datenstroms (3) und die ermittelte maximale erste Sendebitrate der Laserverbindung (4) oder die empfangene maximale zweite Sendebitrate der Laserverbindung (4) gleich oder größer ist als eine vorbestimmte minimale Sendebitrate der Laserverbindung (4).

2. Verfahren nach Anspruch 1, bei dem der Datenstrom (3) korrespondierend zu einem Verhältnis der jeweiligen maximalen Sendebitraten der Laserverbindung (4) zu jeweiligen maximalen Sendebitraten der Richtfunkverbindungen (5) aufgeteilt wird oder der Datenstrom (3) derart aufgeteilt wird, dass eine Datenrate des Laserdatenstroms (40) die maximalen Sendebitraten der Laserverbindung (4) ausschöpft.

3. Verfahren nach Anspruch 1 oder 2, bei dem das Aufteilen des Datenstroms (3) ein Bündeln von zusammenhängenden Datenteilströmen umfasst.

4. Verfahren nach einem der Ansprüche 1 bis 3, bei dem die Switch-Einheit (20) der zweiten Basisstation (2) die empfangene maximale zweite Sendebitrate der Laserverbindung (4) und die empfangene maximale zweite Sendebitrate der Richtfunkverbindung (5) ermittelt.

5. Verfahren nach einem der Ansprüche 1 bis 4, bei dem die minimale Sendebitrate der Laserverbindung abhängig von einem räumlichen Abstand der zweiten Basisstation (2) von der ersten Basisstation (1) bestimmt wird.

6. Verfahren nach einem der Ansprüche 1 bis 5, bei dem die Richtfunkverbindung (5) getrennt und der Datenstrom (3) ausschließlich mittels der Laserverbindung (4) übertragen wird, wenn die ermittelte maximale erste Sendebitrate der Laserverbindung (4) oder die empfangene maximale zweite Sendebitrate der Laserverbindung (4) jeweils größer sind als die Datenrate des Datenstroms (3) und/oder bei dem die Laserverbindung (4) für eine vorbestimmte Richtfunkdauer getrennt und der Datenstrom (3) ausschließlich mittels der Richtfunkverbindung (5) übertragen wird, wenn die ermittelte maximale erste Sendebitrate der Laserverbindung (4) und die empfangene maximale zweite Sendebitrate der Laserverbindung (4) jeweils kleiner sind als die vorbestimmte minimale Sendebitrate der Laserverbindung (4).

7. Verfahren nach einem der Ansprüche 1 bis 6, bei dem das Ermitteln einer maximalen Sendebitrate ein Messen der Sendebitrate während einer vorbestimmten Messdauer umfasst.

8. Verfahren nach einem der Ansprüche 1 bis 7, das während eines Betriebs der ersten Basisstation (1) und der zweiten Basisstation (2) periodisch ausgeführt wird.

9. Basisstation (1, 2) für ein Mobilfunknetz, umfassend eine Lasereinheit (11), eine Richtfunkeinheit (12) und eine mit der Lasereinheit (11) und der Richtfunkeinheit (12) funktional verbundene Switch-Einheit (10, 20), die konfiguriert ist, ein Verfahren nach einem der Ansprüche 1 bis 8 auszuführen.

10. Computerprogrammprodukt, umfassend ein digitales Speichermedium mit einem Programm, das eine Rechenvorrichtung veranlasst, ein Verfahren nach einem der Ansprüche 1 bis 8 als die Switch-Einheit (10, 20) auszuführen, wenn es von einem Prozessor der Rechenvorrichtung ausgeführt wird.
